# NEUE EUROPÄISCHE PATENTSCHRIFT

(11) **EP 1 615 308 B3**
(45) Veröffentlichungstag dieser Patentschrift: **07.01.2015**
(45) Hinweis auf die Patenterteilung: 21.09.2011
(21) Anmeldenummer: 05014262.9
(22) Anmeldetag: 30.06.2005
(51) Int. Cl.: H02B 1/42

(54) **Verteiler der Elektroinstallation**
Electrical distributor
Répartiteur électrique

(30) Priorität: 06.07.2004 DE 102004032864
(43) Veröffentlichungstag der Anmeldung: 11.01.2006
(60) Teilanmeldung: 11007650.2
(73) Patentinhaber: Hager Electro GmbH, 66131 Saarbrücken (DE)
(72) Erfinder: Dissel, Klaus, 66131 Saarbrücken (DE); Zimmermann, Manfred, 66131 Saarbrücken (DE); Theuer, Markus, 66131 Saarbrücken (DE)
(74) Vertreter: Nuss, Pierre

(56) Entgegenhaltungen:
- EP-A- 0 017 124
- EP-A- 0 651 483
- EP-A- 1 359 650
- WO-A-00/62387
- FR-A- 2 571 183

## Beschreibung

Die Erfindung betrifft einen Verteiler einer Elektroinstallation mit mindestens einer zur Halterung mindestens eines Gerätes, insbesondere eines Schutzschalters, dienenden Hutschiene oder Montageplatte, für die an einem Unterbau in Abstand voneinander zwei Abstützungen angeordnet sind, an denen die Hutschiene oder Montageplatte derart im Abstand von dem Unterbau befestigt ist, dass im Zwischenraum zwischen dem Unterbau und der Hutschiene oder Montageplatte Leitungen verlegbar sind, wobei die Abstützungen einerseits und rückseitig von der Hutschiene oder Montageplatte vorstehende Kupplungsteile andererseits gegenseitige Anpassungen aufweisen, und ein entriegelbares, die Abstützungen und die Kupplungsteile zusammenhaltendes und einen gemeinsamen festen Sitz der Abstützungen und der Kupplungsteile sicherndes Halteelement vorgesehen ist.

Eine Variante der Erfindung betrifft einen Verteiler der Elektroinstallation mit mindestens einer zur Halterung mindestens eines Gerätes, insbesondere Schutzschalters, dienenden Hutschiene oder Montageplatte, für die an einem Unterbau in Abstand voneinander zwei Abstützungen angeordnet sind, an denen die Hutschiene oder Montageplatte derart im Abstand von dem Unterbau befestigt ist, dass im Zwischenraum zwischen dem Unterbau und der Hutschiene oder Montageplatte Leitungen verlegbar sind, wobei die Abstützungen einerseits und die Hutschiene oder Montageplatte andererseits gegenseitige Anpassungen aufweisen, die gemeinsam mit mindestens einer entriegelbaren Raste einen festen Sitz bilden, wobei die Abstützungen die Form eines hohlen Blockes aufweisen, auf dem die Hutschiene unmittelbar aufliegt.

Ein Verteiler der eingangs genannten Art ist aus der EP 0 651 483 A1 bekannt. Die an der Hutschiene befestigten Kupplungsteile werden mittels jeweils eines selbständigen Riegelelementes mit den Abstützungen fest verbunden; das Riegelelement wird in eine in die Abstützungen eingelassene und in die Kupplungsteile hinein fortgesetzte Führung eingesteckt und bis zum Einrasten in einem Eingriff in der Führung, vorgeschoben, wo es einen festen Sitz bildet. Um Kupplung und Abstützung voneinander zu entriegeln, wird das Riegelelement mit Hilfe eines Schraubenziehers aus der festen Position gelöst und aus der Kupplung herausgenommen. Die Schiene kann dann vom Unterbau abgenommen werden.

Der Verteiler nach der genannten Variante ist aus der FR 2 571 183 A1 bekannt. Die Hutschiene wird mittels an den Abstützungen angeordneten Vorsprüngen gehalten, die über einen äußeren Rand der Hutschiene greifen. Die durch die Ausnehmung in der Hutschiene ragenden Rasten blockieren die Hutschiene gegen seitliches Verschieben.

Aus der EP 0017 124 A1 geht ein Installationsgerät hervor, dessen Hutschiene zwischen zwei sich über ihre Länge sich erstreckenden und ihre Flansche unterstützenden Stützschienen auf die, an ihren Enden angeordneten, Abstützungen aufgesetzt wird. Als Abstützungen greifen Zapfen in Löcher der Hutschiene, und jeweils zwei kurze Seitenwände fassen sie ein. Die Hutschiene wird in eine feste Position gebracht, indem eine in dem Zapfen sitzende gekröpfte Feder über dem Boden der Hutschiene einrastet. Durch Druck auf ein freies, nach außen ragendes Federende mit einem Schraubenzieher wird die Feder aus der verriegelnden Position gebracht und die Schiene kann aus der eingerasteten Position gelöst werden.

Die EP 1 359 650 A1 beschreibt eine PE/N-Anschlussvorrichtung für Leitungen, zu deren Höhenverstellung von Hand betätigbare Rasten vorgesehen sind.

Durch Benutzung bekannt sind zwei Abstützungen, an denen die Hutschienen oder eine Montageplatte angeschraubt sind. Die Abstützungen befinden sich in der Regel an zwei Befestigungen an einem Unterbau. Die Geräte werden durch die Abstützungen in Abstand von der Rückwand eines Verteilerkastens o. dgl., ggf. auch einer Gebäudewand, gehalten. Im Zwischenraum werden die Leitungen von oben und/oder unten her an die Geräte gelegt. Zum großen Teil müssen sie dabei hinter mehreren übereinander angeordneten Hutschienen oder Montageplatten mit darauf sitzenden Geräten hindurchgeführt werden.

Der Erfindung liegt die Aufgabe zugrunde, die Verlegung von Leitungen hinter einer mit Geräten besetzten Hutschiene oder Montageplatte zu vereinfachen.

Gemäß der Erfindung wird die Aufgabe wird dadurch gelöst, dass jeweils eines der genannten gegenseitig angepassten Teile eine rückseitig der Hutschiene oder Montageplatte in eine Halteposition federnde und dort mit einem Finger entriegelbare Raste als das genannte Halteelement und das andere Teil eine die Raste beim Einsetzen zurückdrückende Gegenseite mit einer Ausnehmung für den Eingriff der Raste aufweist.

Durch Entriegeln der Raste kann hier eine vollständig mit Geräten besetzte Hutschiene abgenommen werden, um die hinter ihr zu verlegenden Leitungen zu legen. Anschließend kann sie leicht und schnell wieder angesetzt werden. Dann werden die Geräte angeschlossen.

Im Gegensatz zu den bisherigen Schraubbefestigungen, die durch aufgesetzte Geräte verdeckt sind, sind die hinter der Hutschiene an den Abstützungen angeordneten Rasten zugänglich. Sie lassen sich auch hinter den Geräten noch mit einem Finger erreichen. Dementsprechend sind sie vorzugsweise von Hand entriegelbar und, zusammen betrachtet, an den Außenseiten der beiden Abstützungen angeordnet, wo sie mit dem Zeigefinger oder Mittelfinger der linken und der rechten Hand gleichzeitig gedrückt werden können und die Hände dabei die Hutschiene mit den auf ihr sitzenden Geräten fassen und abnehmen können. Für eine Montageplatte, die in der Regel nur ein Gerät aufweist, gilt Entsprechendes.

Bevorzugt weisen in der an sich bekannten Weise zwei senkrechte Leisten des Unterbaues die Abstützungen auf.

In einer ersten Ausführungsform haben die Kupplungsteile die Form eines Pyramidenstumpfes und die Abstützungen die Form eines offenen Kastens, an dessen Seitenwände innen Rippen, nach unten stärker vorspringend, ausgebildet sind, an denen das Kupplungsteil anliegt.

Die Raste ist dann vorzugsweise eine in einer Wand des Pyramidenstumpfes ausgebildete federnde Zunge mit einem nach außen abgewinkelten Riegelelement, das in eine Ausnehmung einer Seitenwand der Abstützung greift.

In einer zweiten Ausführungsform haben die Abstützungen die Form eines hohlen Blockes, auf dem das Kupplungsteil aufliegt und an dem es an einer Seitenwand mit einem flachen Schenkel anliegt, in dem als die Raste eine federnde Zunge mit einem abgewinkelten Riegelelement ausgebildet ist, das in eine Ausnehmung der Seitenwand des Blockes greift.

Vorzugsweise greift hier das Kupplungsteil außerdem von der Auflagefläche her mit einem Bolzen in eine in dem Block ausgebildete Aufnahme.

In einer dritten Ausführungsform haben die Kupplungsteile die Form eines U-Profils und die Abstützungen sind Abschnitte von Leisten des Unterbaues und werden von dem U-Profil von oben umfasst; in dem einen U-Schenkel sind als die mindestens eine Raste zwei federnde Zungen mit einem nach innen abgewinkelten Riegelelement ausgebildet, das jeweils in eine Ausnehmung einer Seitenwand de Leiste greift. Eine der beiden Rasten ist vorzugsweise nahe dem einen Ende des U-Profils angeordnet.

Hier kann die Hutschiene oder Montageplatte nach Entriegeln der einen Rasten unter Beibehaltung der zweiten Rastung von der Wand abgeschwenkt werden, womit ebenfalls der Zwischenraum zur Wand vergrößert wird und im übrigen die an der abgeschwenkten Seite befindlichen Anschlusskonfakte der Geräte leichter zugänglich sind. Um die Hutschiene oder Montageplatte ganz abzunehmen, wird auch die zweite Verrastung gelöst.

Eine vorteilhafte Ausgestaltung dieser Ausführungsform besteht darin, dass die Ausnehmung für die eine Raste in Abständen mehrfach vorhanden ist und die Ausnehmung für die andere Raste aus einem Langloch besteht.

Damit ist es möglich, die Hutschiene nach der einen oder der anderen Seite zu versetzen, um auf der gegenüberliegenden Seite mehr Platz für das Anschließen der Geräte zu schaffen.

Gemäß der erwähnten Variante der Erfindung wird die Aufgabe dadurch gelöst, dass der Block eine die Hutschiene oder Montageplatte auf einem Teil ihrer Höhe seitlich einfassende Einsenkung und an seinem Boden eine weitere Einsenkung aufweist, in die sich eine Ausprägung der Hutschiene nach unten legt, die Raste in einer Halteposition über den Boden der Hutschiene fasst und die Abstützungen und die Hutschiene oder die Montageplatte in der Halteposition zusammenhält und rückseitig der Hutschiene oder Montageplatte mit einem Finger aus der Halteposition entriegelbar ist.

Die Zeichnungen geben Ausführungsbeispiele der Erfindung wieder.
- Fig. 1: zeigt einen Ausschnitt aus einem ersten Verteiler,
- Fig. 2: zeigt etwa den in Fig. 1 gezeigten Ausschnitt in auseinandergezogener Darstellung,
- Fig. 3: zeigt einen Ausschnitt aus einem weiteren Verteiler in auseinandergezogener Darstellung,
- Fig. 4: zeigt eine Einzelheit aus Fig. 3 unter anderem Blickwinkel,
- Fig. 5: zeigt einen Ausschnitt aus einem weiteren Verteiler,
- Fig. 6: zeigt einen Ausschnitt aus dem Verteiler nach Fig. 5 in auseinandergezogener Darstellung,
- Fig. 7: zeigt einen weiteren Verteiler in einer Montagestellung,
- Fig. 8: zeigt den Verteiler nach Fig. 7 in einer anderen Montagestellung.

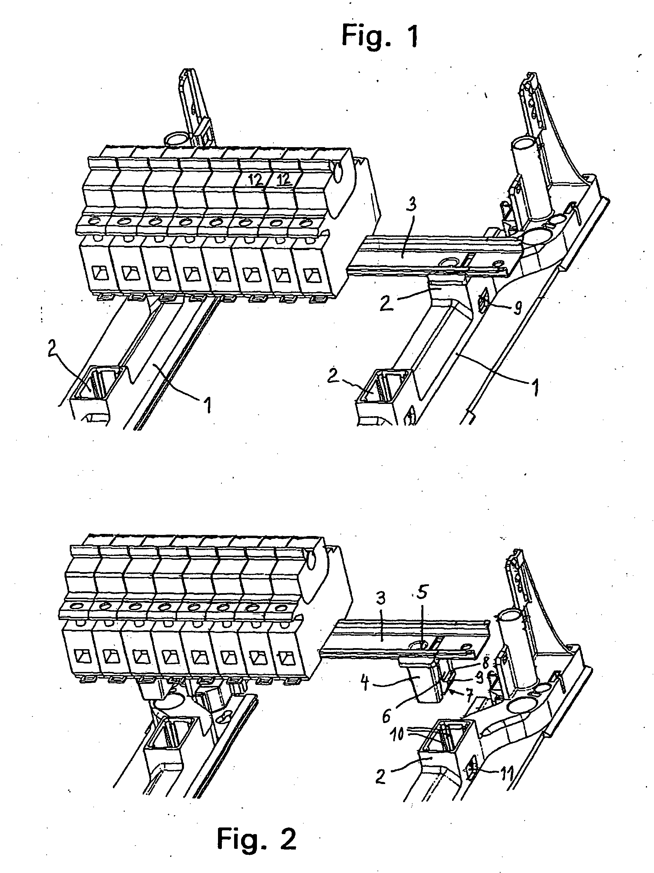

Fig. 1 lösst zwei Leisten 1 erkennen, die in bekannter Weise an der Rückwand eines Verteilerschrankes o. dgl., beispielsweise aber auch unmittelbar an einer Gebäudewand, befestigt sind.

An den Leisten 1 sind Abstützungen 2 für eine Hutschiene 3 ausgebildet.

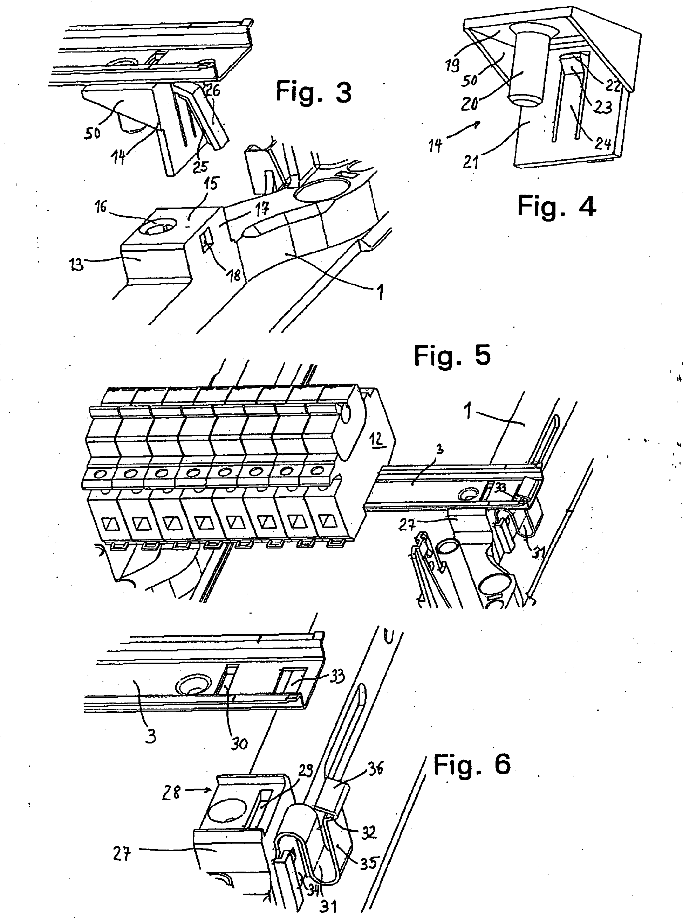

Die Hutschiene 3 ist zur Befestigung an den Abstützungen 2 mit Kupplungsteilen 4 versehen. Die Kupplungsteile 4 und die Hutschiene 3 sind in der zu fig. 5 und 6 näher beschriebenen Weise einander angepasst und bei 5 durch eine Schraube miteinander verbunden.

Die Kupplungsteile 4 sind als hohle Pyramidenstümpfe mit rechteckiger Grundfläche gestaltet. In der Wand der einen Breitseite ist, im Prinzip in der aus Fig. 4 ersichtlichen Weise, durch Einschnitte eine biegsame Zunge 6 geschaffen. An dieser ist ein eine Schrägfläche 7 und eine Haltefläche 8 aufweisendes Riegelelement 9 ausgebildet.

Die Abstützungen 2 sind, ebenfalls in hohler Ausführung, quaderförmig. An jeder Seitenwand sind innen zwei Rippen 10 angeformt. Die Rippen 10 treten nach unten fortschreitend aus der Wand heraus dergestalt, dass sie für die Pyramidenflächen des Kupplungsteils 4 Anlageflächen gleicher Neigung und insgesamt für das Kupplungsteil 4 eine angepasste Aufnahme bieten.

Werden die beiden Kupplungsteile 4 in die Abstützungen 2-eingesetzt, so drückt sich jeweils durch Anstoß der Schrägfläche 7 an der Wand der Abstützung 2 die Zunge 6 mit dem Riegelelement 9 zurück. Das Riegelelement rutscht an der Wand entlang. In der Endstellung erreicht es eine Ausnehmung 11 in der Wand der Abstützung 2 und schnappt in diese ein. Die Haltefläche 8 sichert dann einen festen Sitz des Kupplungsteils 4 in der Abstützung 2.

Soll die, vollständig mit Modulargeräten 12 besetzt zu denkende, Hutschiene 3entfernt werden, so wird sie beidhändig mit nach vorne gekehrter Handfläche hintergriffen und mit dem Mittelfinger oder Zeigefinger das jeweilige Riegelelement 9 aus der Ausnehmung 11 heraus zurückgedrückt und darauf die Hutschiene 3 mit den Modulargeräten 12 abgehoben.

Auch bei Anordnung des Verteilers eng am Rand einer Wand bleibt genügend Platz für den zur Entriegelung benutzten Finger und seine Bewegung.

In Fig. 3 und 4 ist eine gegenüber Fig. 1 und 2 abgewandelte Kombination einer Abstützung 13 mit einem Kupplungsteil 14 dargestellt.

Die Abstützung 13 hat äußerlich die Form eines Blockes. In der Decke 15 des hohl ausgeführten Blockes befindet sich eine runde Ausnehmung 16, in der einen Seitenwand 17 eine viereckige Ausnehmung 18.

Das Kupplungsteil 14 ist gewinkelt. Ein Winkelschenkel 19 liegt auf der Decke 15, wobei ein Bolzen 20 zentrierend in die Ausnehmung 16 ragt. Der andere Winkelschenkel 21 liegt an der Seitenwand 17 an; dabei greift ein Riegelelement 22 in die Ausnehmung 18. Zwei dreieckige Seitenwände 50 zwischen den Winkelschenkeln 19 und 21 dienen der Versteifung. Das, wiederum mit einer Schrägfläche 23 versehene, Riegelelement 22 ist an einer durch einen U-förmigen Ausschnitt in dem Winkelschenkel 21 geschaffenen Zunge 24 ausgebildet. An der Außenseite der Zunge 24 ist ein mit einer Versteifungsrippe 25 versehener Bügel 26 angeformt.

Auch hier wird bei der Montage die Zunge 24 durch Anstoß der Schrägfläche 23 an der Kante und Seitenwand 17 der Abstützung 13 zurückgedrückt, bis sie einrastet. Zum Verbiegen der Zunge 24 nach außen und Herausziehen des Riegeletements 22 aus der Ausnehmung 18 wird nahe seinem Ende auf den Bügel 26 gedrückt.

Auch nach Fig. 5 und 6 ist als, hier mit 27 bezeichnete, Abstützung ein hohler Block vorgesehen. Der Block ist der Hutschiene 3 und diese ist ihm unmittelbar angepasst:
Er weist eine Einsenkung 28 auf, die die Hutschiene 3 man zwei Seiten einfasst, und darüber hinaus eine weitere Einsenkung 29, die eine Ausprägung 30 der Hutschiene nach unten aufnimmt. Die Einsenkung 28 fixiert die Hutschiene 3 in Querrichtung, die Einsenkung 29 und Ausprägung 30 fixieren sie in Längsrichtung. Durch eine Biegefeder 31 mit einem Riegelelement 32 wird die Hutschiene 3 auf der Abstützung 27 gehalten, indem die Biegefeder 31 durch einen Ausschnitt 33 in der Hutschiene tritt und das Riegelelement 32 neben dem Ausschnitt 33 über dem Boden der Hutschiene liegt.

Die Biegefeder 32 ist S-förmig gebogen und mit ihrem einen Endschenkel 34 befestigt. Am Ende des anderen Endschenkels 35 ist das, wiederum mit einer Schrägfläche 36 versehene, Riegelelement 32 abgewinkelt. Auf den Endschenkel 35 wird mit dem Finger gedrückt, um den Sitz der Hutschiene 3 auf der Abstützung 27 zu entriegeln und die Hutschiene 3 mit den Modulargeräten 12 abzunehmen.

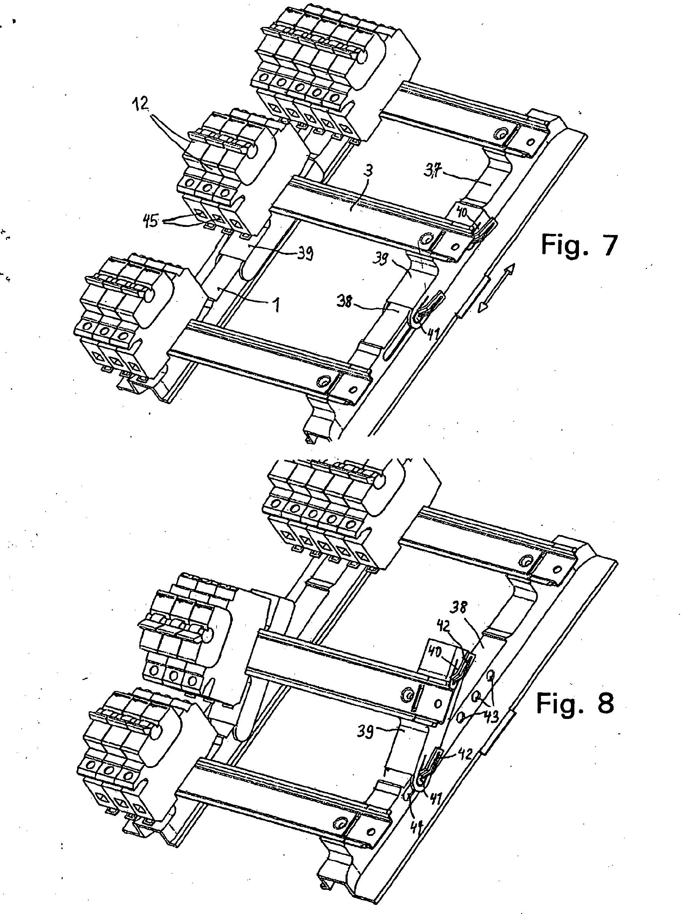

Fig. 7 und 8 zeigen den Leisten 1 in Fig. 1 und 2 entsprechende Leisten 37, die auf einem mittleren Abschnitt 38 ohne eine Erhöhung die Abstützung darstellen.

Zwei an der Hutschiene 3 befestigte U-Profile 39 dienen hier als Kupplungsteile.

Die Rasten bestehen aus durch U-förmige Einschnitte in dem äußeren Seitenschenkel der U-Profile geschaffenen Zungen 40, 41, an denen nach innen als Riegelelement ein flacher Bolzen und nach außen ein dem Bügel 26 entsprechender Bügel 42 für das Entriegeln angeformt ist.

Den Zungen 40 und ihren Bolzen sind in den Leisten 37 jeweils drei Löcher 43 zugeordnet, von denen das mittlere für die Normalstellung vorgesehen ist. Der Bolzen der Zungen 41 greift jeweils in ein Langloch 44. Die beiden äußeren Löcher 43 erlauben unter Beibehaltung des Eingriffs in dem Langloch 44 die Fixierung der Hutschiene 3 in einer verschobenen Lage, wie in Fig. 8 dargestellt. Damit wird auf der einen Seite Platz geschaffen, um die Anschlusskontakte besser zugänglich zu machen für die Verdrahtung.

Zum Abheben der Hutschiene 3 wird an den Zungen 40 entriegelt und, wiederum unter Beibehaltung des Eingriffs in dem Langloch 44, die Hutschiene 3 mit den auf ihr sitzenden Modulargeräten 12 hochgeschwenkt.

Durch entsprechendes Betätigen der Zungen 41 lässt sich die Hutschiene 3 mit den Modulargeräten 12 ganz abnehmen.

Mit Ausnahme der Hutschienen 3 und der Biegefeder 31 sind alle beschriebenen Elemente des Verteilers Spritzgussteile aus Kunststoff.

## Patentansprüche

1. Verteiler einer Elektroinstallation mit mindestens einer zur Halterung mindestens eines Gerätes (12), insbesondere eines Schutzschalters (12), dienenden Hutschiene (3) oder Montageplatte, für die an einem Unterbau in Abstand voneinander zwei Abstützungen (2,13;38) angeordnet sind, an denen die Hutschiene (3) oder Montageplatte derart im Abstand von dem Unterbau des Verteilers befestigt ist, dass im Zwischenraum zwischen dem Unterbau und der Hutschiene (3) oder Montageplatte Leitungen verlegbar sind, wobei die Abstützungen einerseits und rückseitig von der Hutschiene (3) oder Montageplatte vorstehende Kupplungsteile (4,14,39) andererseits gegenseitige Anpassungen aufweisen, und ein entriegelbares, die Abstützungen (2,13,38) und die Kupplungsteile (4,14,39) zusammenhaltendes und einen gemeinsamen festen Sitz der Abstützungen (2,13,38) und der Kupplungsteile (4,14,39) sicherndes Halteelement vorgesehen ist,
**dadurch gekennzeichnet,**
**dass** jeweils eines der genannten gegenseitig angepassten Teile eine in eine Halteposition federnde und rückseitig der Hutschiene (3) oder Montageplatte mit einem Finger entriegelbare Raste (6,9;22,24;40,41) als das genannte Halteelement und das andere Teil eine die Raste (6,9;22,24;40,41) beim Einsetzen zurückdrückende Gegenseite mit einer Ausnehmung für den Eingriff der Raste (6,9;22,24;40,41) aufweist, wobei die Hutschiene (3) oder Montageplatte mit zwei Händen fassbar und unter gleichzeitiger Entriegelung der Rasten (6,9,22,24,40,41) mit jeweils einem Finger senkrecht zum Unterbau abnehmbar ist, und wobei die Rasten (6,9;22,24;40,41) an den, zusammen betrachtet, Außenseiten der beiden Abstützungen (2;13;38) angeordnet sind, wobei bevorzugt in an sich bekannter Weise zwei Leisten (1;37) des Unterbaues die Abstützungen (2; 13;38) aufweisen.

2. Verteiler nach Anspruch 1, **dadurch gekennzeichnet, dass** die Kupplungsteile (4) die Form eines Pyramidenstumpfes und die Abstützungen (2) die Form eines offenen Kastens haben, an dessen Seitenwänden innen Rippen (10), nach unten stärker vorspringend, ausgebildet sind, an denen das Kupplungsteil (4) anliegt und dass die Raste (6,9) eine in einer Wand des Pyramidenstumpfes ausgebildete federnde Zunge (6) mit einem nach außen abgewinkelten Riegelelement (9) ist, das in eine Ausnehmung (11) einer Seitenwand der Abstützung (2) greift.

3. Verteiler nach Anspruch 1, **dadurch gekennzeichnet, dass** die Abstützungen (13) die Form eines hohlen Blockes haben, auf dem das Kupplungsteil (14) aufliegt und an dem es an einer Seitenwand (17) mit einem flachen Schenkel (21) anliegt, in dem als die Raste (22,24) eine federnde Zunge (24) mit einem abgewinkelten Riegelelement (22) ausgebildet ist, das in eine Ausnehmung (18) der Seitenwand (17) des Blockes greift.

4. Verteiler nach Anspruch 3, **dadurch gekennzeichnet, dass** das Kupplungsteil (14) von der Auflagefläche her mit einem Bolzen (20) in eine in dem Block ausgebildete Aufnahme (16) greift.

5. Verteiler nach Anspruch 1, **dadurch gekennzeichnet, dass** die Kupplungsteile (39) die Form eines U-Profils haben und die Abstützungen Abschnitte (38) von Leisten (37) des Unterbaues sind und von dem UProfil von oben her umfasst werden und dass in dem einen U-Schenkel als die mindestens eine Raste zwei federnde Zungen (41 ;42) mit einem nach innen abgewinkelten Riegelelement ausgebildet sind, das jeweils in eine Ausnehmung (43) einer Seitenwand der Leiste (37) greift.

6. Verteiler nach Anspruch 5, **dadurch gekennzeichnet, dass** die Ausnehmung (43) für die eine Raste (40) in Abständen mehrfach vorhanden ist und die Ausnehmung für die andere Raste (41), die vorzugsweise nahe dem einen Ende des U-Profils angeordnet ist, aus einem Langloch (44) besteht.

7. Verteiler der Elektroinstallation mit mindestens einer zur Halterung mindestens eines Gerätes (12), insbesondere Schutzschalters (12), dienenden Hutschiene (3) oder Montageplatte, für die an einem Unterbau in Abstand voneinander zwei Abstützungen (27) angeordnet sind, an denen die Hutschiene oder Montageplatte derart im Abstand von dem Unterbau befestigt ist, dass im Zwischenraum zwischen dem Unterbau und der Hutschiene oder Montageplatte Leitungen verlegbar sind, wobei die Abstützungen (27) einerseits und die Hutschiene (3) oder Montageplatte andererseits gegenseitige Anpassungen aufweisen, die gemeinsam mit mindestens einer entriegelbaren Raste (31,32) einen festen Sitz bilden, wobei die Abstützungen (27) die Form eines hohlen Blockes aufweisen, auf dem die Hutschiene (3) unmittelbar aufliegt,
**dadurch gekennzeichnet,**
**dass** der Block eine die Hutschiene (3) oder Montageplatte auf einem Teil ihrer Höhe seitlich einfassende Einsenkung (28) und an seinem Boden eine weitere Einsenkung (29) aufweist, in die sich eine Ausprägung (30) der Hutschiene (3) oder Montageplatte nach unten legt, die Raste (31,32) in einer Halteposition über den Boden der Hutschiene (3) oder Montageplatte fasst und die Abstützungen (27) und die Hutschiene (3) oder die Montageplatte in der Halteposition zusammenhält und rückseitig der Hutschiene (3) oder Montageplatte mit einem Finger aus der Halteposition entriegelbar ist.

8. Verteiler nach Anspruch 7, **dadurch gekennzeichnet, dass** zwei Rasten (31,32) vorgesehen sind und die Hutschiene (3) oder Montageplatte mit zwei Händen fassbar und unter gleichzeitiger Entriegelung der Rasten (31,32) mit jeweils einem Finger senkrecht zum Unterbau abnehmbar ist.

## Claims

1. Distribution unit for an electrical installation, comprising at least one top hat rail (3) or mounting plate serving for the mounting of at least one device (12), in particular a protective switch (12), two supports (2, 13; 38) for the top hat rail or mounting plate being disposed, at a spacing from one another, on a substructure, the top hat rail (3) or mounting plate being secured to the supports, at a spacing from the substructure of the distribution unit, in such a manner that conductors can be laid in the intervening space between the substructure and the top hat rail (3) or mounting plate, the supports, on the one hand, and, on the other hand, coupling parts (4, 14, 39) that project, on the rear side, from the top hat rail (3) or mounting plate, having mutual adaptations, and a releasable retaining element being provided, which holds together the supports (2, 13, 38) and the coupling parts (4, 14, 39) and ensures a shared firm fit of the supports (2, 13, 38) and the coupling parts (4, 14, 39),
**characterised in that**
one of the above-mentioned mutually-adapted parts has, as the above-mentioned retaining element, a latch (6, 9; 22, 24; 40, 41) that can be released, at the rear of the top hat rail (3) or mounting plate, by one finger, and biases into a retaining position, and the other part has an opposing portion which, on insertion, presses back the latch (6, 9; 22, 24; 40, 41) and has a recess for engaging the latch (6, 9; 22, 24; 40, 41), **in that** the top hat rail (3) or mounting plate can be grasped by two hands and can be removed perpendicular to the substructure with simultaneous release of the latches (6, 9; 22, 24; 40, 41) by in each case one finger, and **in that** the latches (6, 9; 22, 24; 40, 41) are disposed on the outer sides of the two supports (2; 13; 38), when these are viewed together, two rails (1; 37) of the substructure having the supports (2; 13; 38), preferably in a manner known as such.

2. Distribution unit according to Claim 1, **characterised in that** the coupling parts (4) have the shape of a truncated pyramid and the supports (2) have the shape of an open box, on the side walls of which inner ribs (10) are formed, the ribs protruding to an increasing extent in the downward direction, and the coupling part (4) abutting against the ribs, and **in that** the latch (6, 9) is a resilient tongue (6) formed in a wall of the truncated pyramid and having a locking member (9) that is angled outwardly, the locking member engaging in a recess (11) of a side wall of the support (2).

3. Distribution unit according to Claim 1, **characterised in that** the supports (13) have the shape of a hollow block on which the coupling part (14) is supported and against which the coupling part abuts on a side wall (17) by way of a flat limb (21), in which limb a resilient tongue (24) that has an angled-out locking member (22) is formed as the latch (22, 24), the locking member engaging in a recess (18) of the side wall (17) of the block.

4. Distribution unit according to Claim 3, **characterised in that** the coupling part (14) engages in an aperture (16) formed in the block by way of a pin (20) that extends from the supporting surface.

5. Distribution unit according to Claim 1, **characterised in that** the coupling parts (39) have the shape of a U-profile and the supports are portions (38) of rails (37) of the substructure and are embraced from above by the U-profile, and **in that** in one of the U-limbs, two resilient tongues (41; 42) that have an inwardly angled locking member are formed as the at least one latch, each locking member engaging in a recess (43) of a side wall of the rail (37).

6. Distribution unit according to Claim 5, **characterised in that** the recess (43) for one (40) of the latches is provided as a spaced-apart plurality and the recess for the other latch (41), which is preferably disposed near one of the ends of the U-profile, consists of a slot (44).

7. Distribution unit for an electrical installation, comprising at least one top hat rail (3) or mounting plate serving for the mounting of at least one device (12), in particular a protective switch (12), two supports (27) for the top hat rail or mounting plate being disposed, at a spacing from one another, on a substructure, the top hat rail or mounting plate being secured to the supports, at a spacing from the substructure of the distribution unit, in such a manner that conductors can be laid in the intervening space between the substructure and the top hat rail or mounting plate, the supports (27), on the one hand, and, on the other hand, the top hat rail (3) or mounting plate, having mutual adaptations, which together with at least one releasable latch (31, 32) establish a shared firm fit, the supports (27) having the shape of a hollow block on which the top hat rail (3) is supported directly,
**characterised in that**
the block has a sunk-in region (28) which embraces sides of the top hat rail (3) or mounting plate over part of the height of the top hat rail or mounting plate and a further sunk-in region (29) on the base of the block, into which sunk-in region a shaped portion (30) of the top hat rail (3) or mounting plate is placed in a downward direction, the latch (31, 32) engaging, in a retaining position, over the base of the top hat rail (3) or mounting plate, and the supports (27) and the top hat rail (3) or the mounting plate being held together in the retaining position and being releasable from the retaining position, at the rear of the top hat rail (3) or mounting plate, by one finger.

8. Distribution unit according to Claim 7, **characterised in that** two latches (31, 32) are provided and the top hat rail (3) or mounting plate can be grasped by two hands and can be removed perpendicular to the substructure with simultaneous release of the latches (31, 32) by in each case one finger.

## Revendications

1. Répartiteur d'une installation électrique comprenant au moins un profilé chapeau (3) ou une plaque de montage servant à fixer au moins un appareil (12), en particulier un disjoncteur de protection (12), pour lequel ou laquelle deux supports (2, 13 ; 38) sont disposés sur une infrastructure, à distance l'un de l'autre, supports sur lesquels le profilé chapeau (3) ou la plaque de montage est fixé(e) à distance de l'infrastructure du répartiteur, de telle sorte que des conducteurs peuvent être posés dans l'espacement entre l'infrastructure et le profilé chapeau (3) ou la plaque de montage, les supports, d'une part, et des parties d'accouplement (4, 14, 39) dépassant à l'arrière du profilé chapeau (3) ou de la plaque de montage, d'autre part, présentant des ajustements réciproques, et un élément de retenue pouvant être déverrouillé, maintenant ensemble les supports (2, 13, 38) et les parties d'accouplement (4, 14, 39) et assurant un ajustement serré commun des supports (2, 13, 38) et des parties d'accouplement (4, 14, 39) étant prévu,
**caractérisé en ce**
**qu'**à chaque fois l'une desdites parties d'adaptation réciproque présente un cran d'arrêt (6, 9 ; 22, 24 ; 40, 41), faisant ressort dans une position de retenue et pouvant être déverrouillé avec un doigt, à l'arrière du profilé chapeau (3) ou de la plaque de montage, et formant ledit élément de retenue, et l'autre partie présente un côté opposé repoussant le cran d'arrêt (6, 9 ; 22, 24 ; 40, 41) lors de l'insertion, avec un évidement pour l'engagement du cran d'arrêt (6, 9 ; 22, 24 ; 40, 41), en ce que le profilé chapeau (3) ou la plaque de montage peut être saisi(e) à deux mains et, sous le déverrouillage simultané et avec chaque fois un doigt, des crans d'arrêt (6, 9 ; 22, 24 ; 40, 41), peut être enlevé (e) perpendiculairement à l'infrastructure et en ce que les crans d'arrêt (6, 9 ; 22, 24 ; 40, 41) sont disposés sur les côtés extérieurs des deux supports (2 ; 13 ; 38) vus ensemble, de préférence deux baguettes (1 ; 37) de l'infrastructure étant munies, de façon connue, des supports (2 ; 13 ; 38).

2. Répartiteur selon la revendication 1, **caractérisé en ce que** les parties d'accouplement (4) ont la forme d'une pyramide tronquée et les supports (2) la forme d'une caisse ouverte, sur les parois latérales de laquelle sont réalisées, à l'intérieur, des nervures (10), dépassant plus fortement vers le bas, contre lesquelles la partie d'accouplement (4) s'appuie et **en ce que** le cran d'arrêt (6, 9) est une lame (6) faisant ressort, conçue dans une paroi de la pyramide tronquée, avec un élément de verrou (9) coudé vers l'extérieur, qui s'engage dans un évidement (11) d'une paroi latérale du support (2).

3. Répartiteur selon la revendication 1, **caractérisé en ce que** les supports (13) ont la forme d'un bloc creux, sur lequel la partie d'accouplement (14) repose et contre lequel elle s'appuie sur une paroi latérale (17) avec une branche (21) plate, dans laquelle est conçue une lame (24) faisant ressort, formant le cran d'arrêt (22, 24) et avec un élément de verrou (22) coudé qui s'engage dans un évidement (18) de la paroi latérale (17) du bloc.

4. Répartiteur selon la revendication 3, **caractérisé en ce que** la partie d'accouplement (14) s'engage à partir de la surface d'appui avec un plot (20) dans un évidement (16) réalisé dans le bloc.

5. Répartiteur selon la revendication 1, **caractérisé en ce que** les parties d'accouplement (39) ont la forme d'un profil en U et les supports sont des sections (38) de baguettes (37) de l'infrastructure et sont entourés par le profil en U par en haut et **en ce que** deux lames (41 ; 42), faisant ressort avec un élément de verrou coudé vers l'intérieur, sont réalisées dans l'une des branches en U en tant que le au moins un cran d'arrêt, lequel élément de verrou s'engage à chaque fois dans un évidement (43) d'une paroi latérale de la baguette (37).

6. Répartiteur selon la revendication 5, **caractérisé en ce que** l'évidement (43) pour l'un des crans d'arrêt (40) est présent à plusieurs reprises à certains intervalles, et l'évidement pour l'autre cran d'arrêt (41), qui est disposé de préférence à proximité de l'une des extrémités du profil en U, est constitué d'un trou oblong (44).

7. Répartiteur d'installation électrique comprenant au moins un profilé chapeau (3) ou une plaque de montage servant à fixer au moins un appareil (12), en particulier un disjoncteur de protection (12), pour lequel ou laquelle deux supports (27) sont disposés sur une infrastructure à distance l'un de l'autre, supports sur lesquels le profilé chapeau ou la plaque de montage est fixé(e) à distance de l'infrastructure, de telle sorte que des conducteurs peuvent être posés dans l'espacement entre l'infrastructure et le profilé chapeau ou la plaque de montage, les supports (27), d'une part, et le profilé chapeau (3) ou la plaque de montage, d'autre part, présentant des ajustements réciproques, lesquels forment un siège fixe conjointement avec au moins un cran d'arrêt (31, 32) pouvant être déverrouillé, les supports (27) présentant la forme d'un bloc creux, sur lequel le profilé chapeau (3) repose directement,
**caractérisé en ce que**
le bloc présente un enfoncement (28) entourant latéralement le profilé chapeau (3) ou la plaque de montage sur une partie de sa hauteur et un autre enfoncement (29) sur son fond, enfoncement dans lequel une empreinte (30) du profilé chapeau (3) ou de la plaque de montage se pose vers le bas, le cran d'arrêt (31, 32) agissant, dans une position de retenue, au-dessus du fond du profilé chapeau (3) ou de la plaque de montage, maintenant ensemble les supports (27) et le profilé chapeau (3) ou la plaque de montage dans la position de retenue, et pouvant être déverrouillé avec un doigt de la position de retenue à l'arrière du profilé chapeau (3) ou de la plaque de montage.

8. Répartiteur selon la revendication 7, **caractérisé en ce que** deux crans d'arrêt (31, 32) sont prévus et le profilé chapeau (3) ou la plaque de montage peut être saisi (e) à deux mains et peut être enlevé(e) avec à chaque fois un doigt perpendiculairement à l'infrastructure en déverrouillant simultanément les crans d'arrêt (31, 32).
